# FASCICULE DE BREVET EUROPEEN

(11) **EP 3 662 248 B1**
(45) Date de publication et mention de la délivrance du brevet: **31.08.2022**
(21) Numéro de dépôt: 18786835.1
(22) Date de dépôt: 01.08.2018
(51) Int. Cl.: G01N 1/22, G01N 15/06, G01T 7/04

(54) **DISPOSITIF DE COLLECTE ET DE DETECTION D'AEROSOLS**
VORRICHTUNG ZUM SAMMELN UND ENTNEHMEN VON AEROSOLEN
DEVICE FOR COLLECTION AND DETECTION OF AEROSOLS

(30) Priorité: 01.08.2017 FR 1757381
(43) Date de publication de la demande: 10.06.2020
(73) Titulaire: Bertin Technologies, 78180 Montigny-le-Bretonneux (FR)
(72) Inventeur: NI, Bo, 78125 Vieille-Eglise-En-Yvelines (FR); POZZOBON, Yvan, 38100 Grenoble (FR)
(74) Mandataire: Hautier IP
(86) Numéro de dépôt international: PCT/FR2018/051991
(87) Numéro de publication internationale: WO 2019/025736

(56) Documents cités:
- EP-A2- 0 352 126
- EP-A2- 0 473 015
- WO-A1-2014/191411
- FR-A1- 2 707 762
- GB-A- 829 267
- US-A- 5 404 762
- US-B1- 7 651 543

## Description

### DOMAINE

La présente invention concerne un dispositif de collecte et une utilisation d'un tel dispositif pour collecter des aérosols tels que des aérosols radioactifs et/ou biologiques et/ou chimiques présents dans l'air ambiant qui peut être l'air extérieur ou bien l'air à l'intérieur d'un bâtiment.

Le domaine technique de l'invention est de manière non limitatif celui de la surveillance d'une contamination atmosphérique d'un air ambiant avec un aérosol tel que précité.

### CONTEXTE

Classiquement, un dispositif de collecte et de détection d'aérosols d'intérêt comprend un filtre de collecte apte à retenir les particules d'intérêt. Le flux d'air est généré par des moyens d'aspiration, provoquant un dépôt de particules sur le filtre de collecte. Un détecteur de particules est disposé en regard du filtre de collecte. Une sortie du détecteur de particules est couplée à un amplificateur analogique pour envoyer un signal amplifié à un dispositif de traitement des données détectées.

Il est notamment connu du document FR2516243 de monter le filtre qui est à ruban entre une sortie d'un conduit d'amenée d'air et l'entrée d'un conduit d'évacuation, l'air aspiré par le conduit d'amenée s'écoulant au travers du filtre dans le conduit d'évacuation jusqu'à une sortie de celui-ci. Toutefois, les particules de grosses tailles peuvent être aspirées dans le conduit d'amenée et venir se loger à la sortie du conduit d'amenée pouvant dès lors polluer la détection des particules d'intérêt, ou colmatage dans le conduit.

Dans une autre document FR8406690, il a été proposé de réaliser une pluralité de secteurs d'alvéoles délimitées entre un détecteur et un filtre. Les alvéoles sont séparées par des cloisons et l'air est aspiré au travers des ouvertures latérales des alvéoles au travers du filtre. Si ce dispositif permet d'augmenter la résolution spatiale de détection du fait de la présence de plusieurs alvéoles séparées, il ne permet pas d'empêcher l'ingestion de particules de gros diamètre.

GB829267 A divulgue un dispositif de collecte de particules comprenant des moyens d'aspiration et un filtre sous la forme d'un ruban.

Enfin, dans un dernier document FR1354838, il a été proposé de réaliser une tête de collecte comprenant un conduit annulaire d'amenée d'air dont l'entrée d'air est circulaire. Dans cette réalisation, le filtre est disposé en position basse et le détecteur est agencée en vis-à-vis du filtre. Là encore, l'ingestion de grosses particules dont le diamètre est grand en comparaison des particules d'intérêt peut nuire à l'efficacité du dispositif du fait du colmatage du filtre.

De plus, dans les différentes réalisations décrites précédemment, l'ingestion de particules conduit à une pollution du circuit ou canal d'écoulement de l'air aspiré qu'il est très difficile voire impossible nettoyer.

Le but de la présente invention est de résoudre au moins un des problèmes posés par l'état de la technique.

### RESUME DE L'INVENTION

Le présent document concerne un dispositif de collecte de particules en suspension dans l'air selon la revendication 1, ainsi qu'un procédé de collecte de particules présentes dans l'air ambiant selon la revendication 14.

Le conduit d'amenée de particules peut ainsi être conformé de manière à permettre lorsque celui-ci est agencé verticalement, c'est-à-dire selon une direction d'action de la gravité terrestre (une ligne de champ), un écoulement des particules de gros diamètre puisse s'effectuer depuis la première entrée d'air vers la seconde entrée d'air sans que ces particules ne viennent colmater le filtre, et/ou influencer les résultats de mesure. Ces particules de diamètres importants sont évacuées par gravité à l'extérieur du conduit d'amenée, ce qui évite une pollution interne du dispositif qui est difficile à éliminer comme indiqué précédemment en référence à la technique antérieure.

On comprend que les particules d'intérêt peuvent entrer dans le circuit par la première entrée d'air et la seconde entrée d'air du conduit d'amenée. Pour cela, des moyens d'aspiration sont prévus et configurés pour permettre une aspiration des particules d'intérêt sans ingestion des particules de gros diamètres. Cela peut être réalisé par des moyens de commande des moyens d'aspiration permettant de contrôler le débit d'air d'aspiration dans le conduit d'amenée d'air.

De plus, la solution proposée permet de limiter la perte de charge appliquée au canal d'écoulement d'air en limitant le colmatage du filtre et l'encrassement du canal d'écoulement.

Dans la présente demande, le terme « partie active d'un filtre » désigne une partie d'un filtre qui est en cours d'utilisation, c'est-à-dire une partie d'un filtre qui est agencée/positionnée de manière à réaliser une opération de filtrage d'air.

Selon une caractéristique particulière, la section de la première entrée d'air peut être sensiblement parallèle à la section de la seconde entrée d'air. En position d'utilisation du dispositif, ces deux entrées d'air peuvent être sensiblement perpendiculaires à une ligne du champ de gravité terrestre, ce qui permet ainsi que de limiter l'impact du vent ambiant sur le conduit d'amenée.

Le contour de la section de la première entrée d'air peut avoir une forme identique à celle du contour de la section de la seconde entrée d'air.

Selon une autre caractéristique, la normale à la partie active du filtre peut être sensiblement perpendiculaire à l'axe du conduit d'amenée qui est sensiblement rectiligne. L'extrémité amont du conduit d'évacuation peut comprendre une ouverture agencée en vis-à-vis de la partie active du filtre et ladite partie active du filtre peut affleurer une paroi interne du conduit d'amenée. L'air aspiré au travers de la première extrémité du conduit d'amenée et la seconde extrémité du conduit d'amenée s'écoule au travers du filtre puis au travers de l'ouverture du conduit d'évacuation et est évacué au niveau d'une sortie de celui-ci.

Selon encore une autre caractéristique, la partie active du filtre peut être montée en vis-à-vis d'au moins un détecteur qui peut être relié à des moyens de traitement et de communication à distance.

Le conduit d'évacuation peut être sensiblement rectiligne et s'étend de préférence sensiblement perpendiculaire au conduit d'amenée.

Enfin, le filtre se présente sous la forme d'un ruban s'étendant depuis un compartiment de stockage jusque dans un compartiment de réception. Le ruban peut être stocké dans le compartiment de stockage sous la forme d'un rouleau enroulé sur un premier axe et s'enrouler au fur et à mesure de l'avancement de la partie active sur un second axe monté dans le compartiment de réception.

Le dispositif peut comprendre des moyens d'entrainement, de préférence motorisés, du ruban depuis le compartiment de stockage vers le compartiment de réception. Ces deux compartiments sont séparés par le conduit d'évacuation.

Selon l'invention, le dispositif comprend un boîtier comprenant une première partie comportant le compartiment de stockage et le compartiment de réception et une seconde partie définissant avec la première partie le conduit d'amenée d'air.

La première partie du boîtier comprend une porte d'accès aux compartiments de réception et de stockage, une première fente débouchant dans le compartiment de stockage et une seconde fente débouchant dans le compartiment de réception, la première fente et la seconde fente pouvant déboucher également sur un bord d'une paroi de la première partie du boîtier sur laquelle est apte à venir s'appliquer la porte d'accès.

Dans une réalisation, la porte d'accès peut comprendre un élément de structure délimitant en position de fermeture de la porte une portion du conduit. De cette manière, le seul déplacement de la porte en position d'ouverture permet un accès simultané au conduit d'amenée d'air et aux compartiments de stockage et de réception du boîtier afin de permettre une mise en place aisée du filtre ruban.

Egalement, le dispositif comprend des moyens d'aspiration agencés pour générer un flux de gaz dans le canal d'écoulement depuis les première et seconde entrées d'air du conduit d'amenée jusqu'à une sortie du conduit d'évacuation. Ces moyens d'aspiration peuvent être reliés au conduit d'évacuation en aval dudit filtre de collecte.

Dans une réalisation particulière, le conduit d'amenée est sensiblement rectiligne et a une section sensiblement constante, ce qui permet d'assurer que la totalité des particules lourdes dont on ne recherche pas la détection puisse être évacuées par la seconde entrée d'air. La section peut être par exemple rectangulaire.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- les figures 1A et 1B sont des vues schématiques en perspective d'un dispositif selon l'invention selon une première variante ;
- la figure 2 est une vue schématique en perspective du dispositif selon l'invention selon une seconde variante, le couvercle ou porte d'accès étant en position ouverte ;
- la figure 3 est une vue en coupe du dispositif des figures 1 et 2 ;
- la figure 4 est un vue de dessous du dispositif de la figure 2 selon une direction s'étendant depuis la seconde entrée d'air vers la première entrée d'air ;
- la figure 5 est une illustration schématique d'une autre forme possible du conduit d'amenée d'air pour le dispositif selon l'invention ;
- la figure 6 est une vue schématique en perspective d'un système de manutention du dispositif selon l'invention.

### DESCRIPTION DETAILLEE

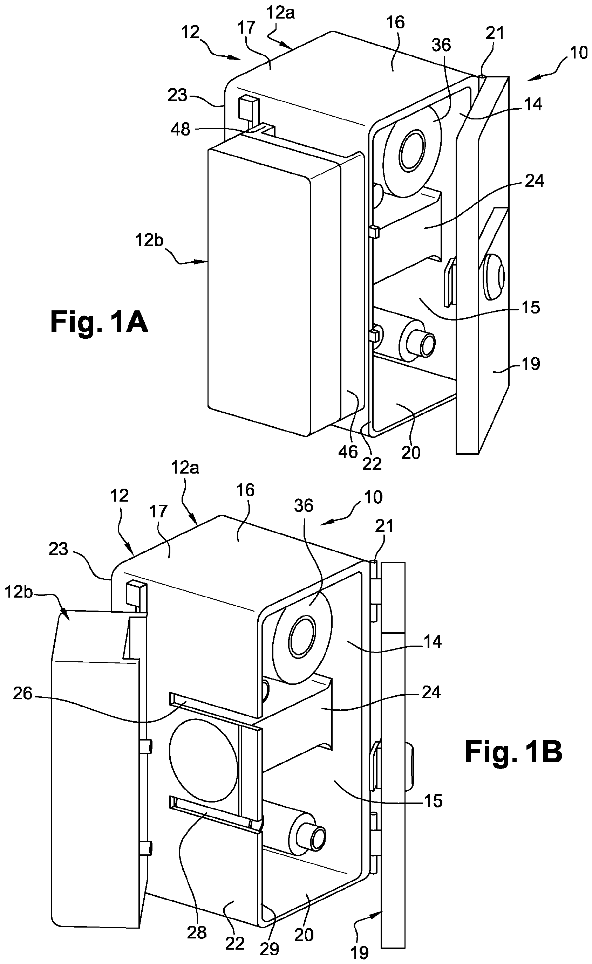

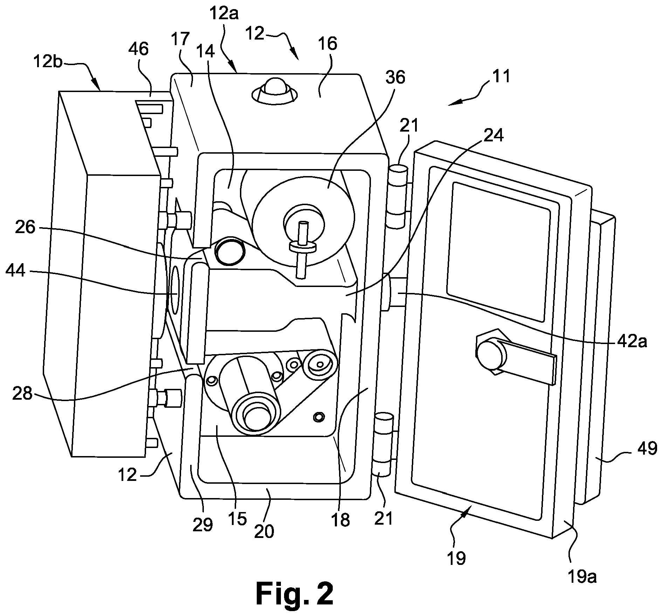

On se réfère tout d'abord simultanément aux figures 1A, 1B et 2 qui représente un dispositif 10, 11 selon l'invention, pour la collecte ou la collecte et la détection de particules en suspension dans l'air, comprenant un boîtier 12 formée en une première partie 12a et seconde partie 12b solidaires l'une de l'autre. La première partie 12a et la seconde partie 12b sont sensiblement parallélépipédiques. La première partie 12a du boîtier comprend deux compartiments 14, 15, un premier compartiment 14 qui est un compartiment dit de stockage et un second compartiment 15 qui est un compartiment dit de réception. Cette première partie 12a du boîtier 12 comprend une partie fixe 17 et une porte d'obturation 19 des compartiments 14, 15 de stockage et de réception qui est articulée à rotation par des charnières 21. Cette porte 19 d'accès au premier compartiment 14 et au second compartiment 15 est étanche pour éviter tout infiltration à l'intérieur de particules telles que des poussières ou produits liquide, et toute infiltration de l'intérieur à l'extérieur des aérosols dangereux captés sur les filtres. Comme cela est mieux en figure 2, la première partie 12a du boîtier 12 comprend des parois latérales 16, 18, 20, 22, 23 délimitant les compartiments 14, 15 lesquels sont séparés par une cloison creuse 24 s'étendant entre deux parois latérales 22, 18 de la première partie 12a du boîtier 12. Egalement, la paroi latérale 22 de la premier partie 12a du boîtier 12 en vis-à-vis de la seconde partie 12b du boîtier 12 comprend une première fente 26 débouchant dans le compartiment de stockage 14 et une seconde fente 28 débouchant dans le compartiment de réception 15. La première fente 26 et la seconde fente 28 débouchent sur un même bord 29 de la paroi 22 afin de permettre un montage de la bande du filtre comme cela apparaitra ultérieurement.

Le compartiment de stockage 14 loge un axe dérouleur 30 porté par la paroi latérale 23 de la première partie 12a du boîtier 12 qui est en vis-à-vis de la porte 18. Cet axe dérouleur 30 est sensiblement perpendiculaire à la paroi 23 et parallèle à la paroi 22 comportant les première et seconde fentes 26, 28. De même, le compartiment de réception 15 loge un axe enrouleur 32 porté par la paroi latérale 23 de la première partie 12a du boîtier 12, sensiblement perpendiculaire à cette paroi 23 et parallèle à la paroi 22 comportant les première et seconde fentes 26, 28. Chacun des compartiments 14, 15 loge également un axe tensionneur 34 parallèle aux axes dérouleur 30 et enrouleur 32 afin de mettre en tension le ruban de filtre.

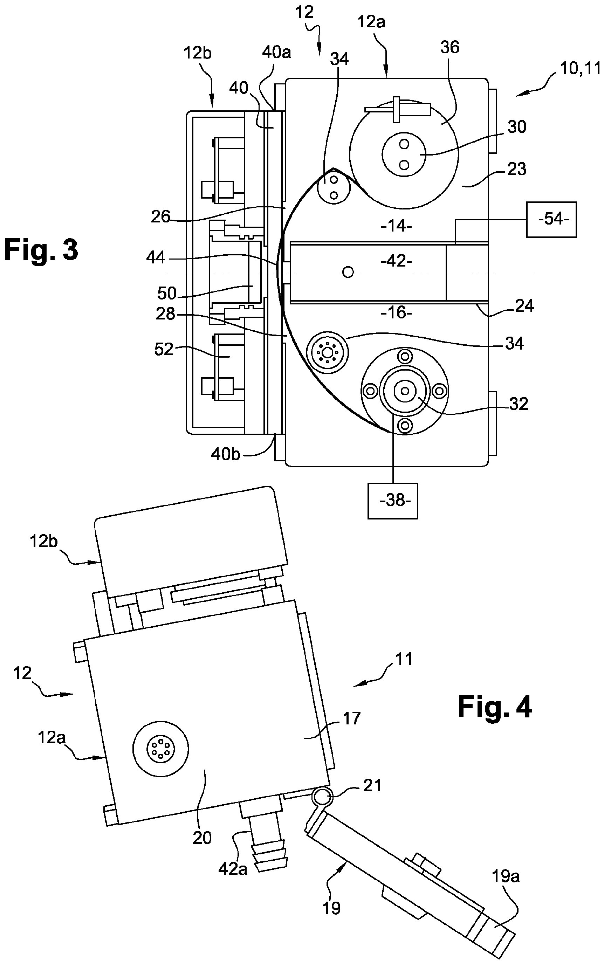

Comme représenté en figure 2 et aussi en figure 3, un rouleau 36 de ruban de filtre est engagé sur l'axe dérouleur 30 du compartiment de stockage 14 et le ruban est déployée au travers de la première fente 26 et de seconde fente 28 afin de circuler au travers de celles-ci. Le ruban est monté de manière à glisser depuis l'axe dérouleur 30 sur le tensionneur 34 du compartiment de stockage 14 qui sert de palier lisse, circuler au travers de la première fente 26 puis au travers de la seconde fente 28, rouler sur le tensionneur 34 du compartiment de réception 15 et s'enrouleur autour de l'axe enrouleur 32 du compartiment de réception 15. Le tensionneur 34 du compartiment de réception 15 assure un comptage de la longueur de ruban qui se déplace entre les deux compartiments.

Pour réaliser l'enroulement du ruban de filtre sur l'axe enrouleur 32, ce dernier peut être relié à des moyens d'entrainement 38, de préférence motorisés (figure 3).

Comme cela est visible sur les différentes figures, la première partie 12a du boiter 12 délimite avec la seconde partie 12b du boîtier 12 un conduit 40 d'amenée d'air et l'intérieur de la cloison 24 délimite un conduit 42 d'évacuation d'air dont la sortie 42a est mieux visible sur la figure 4.

Le conduit d'amenée d'air 40 et le conduit d'évacuation d'air 42 forment ensemble un canal d'écoulement pour l'air ambiant chargé des aérosols d'intérêt. Ce canal loge ainsi une partie active 44 du filtre agencée au niveau d'une ouverture de l'extrémité amont du conduit d'évacuation. Cette partie active 44 du filtre affleure la surface externe de la paroi 22 de la première partie 12a du boiter 12.

Dans une première variante de l'invention représentée en figure 1A et 1B, le conduit d'amenée 40 est délimité latéralement par deux parois latérales 46, 48 assurant une jonction entre la première partie 12a du boîtier 12 et la seconde partie 12b du boîtier 12. Dans cette première variante, la seconde partie 12b du boîtier 12 est articulée en rotation sur la première partie 12a du boîtier 12 de manière à permettre un accès aux fentes 26, 28.

Dans une seconde variante de l'invention représentée aux figures 2 et 4, le conduit d'amenée 40 est délimité latéralement par une paroi latérale 46 assurant la jonction entre la première partie 12a du boîtier 12 et la seconde partie 12b du boîtier 12 et par un élément de structure 49 solidaire du bord 19a de la porte 19 qui est opposé à celui relié aux charnières 21. Dans cette seconde réalisation, lorsque la porte 19 est déplacée en position de fermeture, l'élément de structure 49 vient en vis-à-vis de la paroi latérale 46 de manière à former le conduit 40 d'amenée d'air.

Dans l'une ou l'autre des réalisations, le conduit d'amenée 40 est conformé de manière à ce qu'au moins une droite puisse passer par une première entrée d'air 40a et par une seconde entrée d'air 40b tout en s'étendant intégralement à l'intérieur du conduit d'amenée d'air, de manière à permettre un écoulement des particules de masse importante de la première entrée d'air vers la seconde entrée d'air. Plus spécifiquement, le conduit d'amenée d'air est sensiblement rectiligne et comprend une première entrée d'air 40a formée à une première extrémité et destinée à être placée en position haute et une seconde entrée d'air 40b formée à une seconde extrémité du conduit 40 destinée à être agencée en position basse.

Le conduit d'amenée d'air 40 a ici une section sensiblement rectangulaire laquelle est sensiblement constante entre la première extrémité du conduit d'amenée 40 et la seconde extrémité du conduit d'amenée 40.

La seconde partie 12b du boîtier loge 12 un ou plusieurs détecteurs 50 agencés an vis-à-vis de la partie active 44 du filtre ruban qui est sensiblement perpendiculaire l'axe vertical du conduit d'amenée d'air 40. Cette seconde partie 12b comprend également des moyens amplificateurs 52 analogique pour envoyer des signaux amplifiés à un dispositif de traitement des données détectées.

Pour réaliser une circulation d'air ambiant dans le canal d'écoulement, le dispositif est également pourvu de moyens d'aspiration 54 relié au conduit d'évacuation 42.

Pour réaliser une capture efficace des aérosols d'intérêt, le dispositif 10 est positionné de manière à ce que l'axe du conduit d'amenée 40 soit orienté sensiblement verticalement c'est-à-dire sensiblement aligné avec une direction d'action de la gravité terrestre. L'air est aspiré par les première et seconde extrémités 40a, 40b du conduit d'amenée 40, circule au travers de la partie active 44 du filtre, les particules ou des aérosols d'intérêt étant bloquées sur ladite partie active 44 du filtre, l'air s'évacuant par le conduit d'évacuation 42 jusqu'à la sortie. Au bout d'un certain temps on fait avancer d'un pas le filtre en ruban pour en disposer une partie neuve devant le ou les détecteurs 50.

On comprend aisément que le dispositif 10,11 présenté permet que les particules de grosses dimensions circulent directement depuis la première extrémité vers la seconde extrémité du fait de leur masse importante. Bien évidemment, les moyens d'aspiration devront avoir un débit d'aspiration calibré pour permettre uniquement l'aspiration des particules d'intérêt.

Dans une autre réalisation de l'invention, le conduit d'amenée d'air pourrait comprendre une troisième entrée d'air débouchant en position d'utilisation du dispositif 10, 11 dans un plan sensiblement horizontal.

Dans une réalisation particulière, le conduit d'évacuation est cylindrique et peut avoir un diamètre interne de l'ordre de 25 mm. Le conduit d'amenée peut avoir une longueur mesurée entre les première et seconde entrées d'air d'environ 65 mm pour une section rectangulaire de 7 mm par 15 mm par exemple.

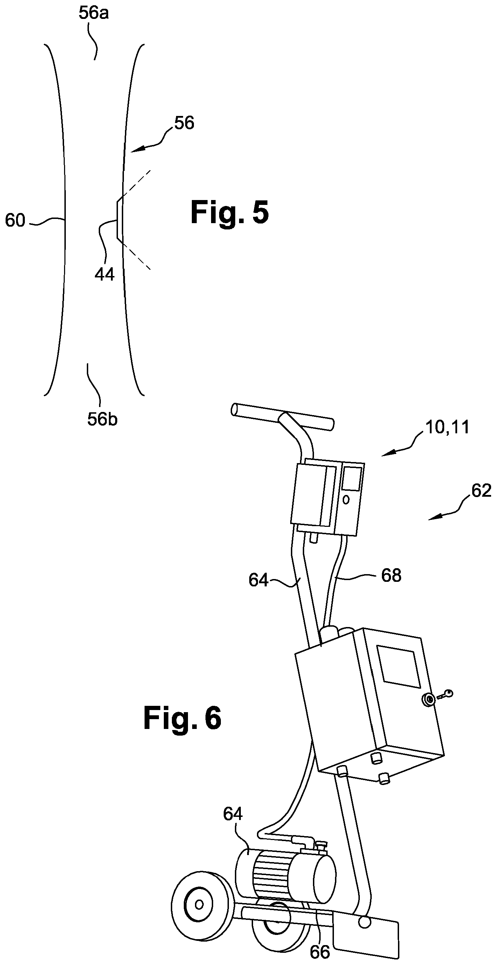

Egalement, l'invention couvre également des conduits d'amenée 56 d'air qui n'ont pas une section constante et qui comprennent par exemple des flancs 58, 60 légèrement incurvées concaves (figure 5). Les entrées d'air 56a, 56b peuvent également être légèrement évasées.

La figure 6 est une représentation d'un système 62 de manutention du dispositif selon l'invention qui comprend un cadre 64 portant une embase 66 de support des moyens d'aspiration 54 qui sont reliés par un tuyau souple 68 au conduit d'évacuation du dispositif 10, 11 selon l'invention lequel est porté en position haute sur le cadre 64.

## Revendications

1. Dispositif (10, 11) de collecte de particules en suspension dans l'air comprenant un canal d'écoulement pour l'air chargé des aérosols comportant un conduit d'amenée (40) et un conduit d'évacuation (42) séparés par une partie active (44) d'un filtre de collecte de particules disposée en travers du canal d'écoulement, le conduit d'amenée (40) comprenant au moins une première entrée d'air (40a) et une seconde entrée d'air (40b), le conduit d'amenée (40) d'air étant conformé de manière à ce qu'au moins une droite puisse passer par la première entrée d'air et par la seconde entrée d'air tout en s'étendant intégralement à l'intérieur du conduit d'amenée d'air,
des moyens d'aspiration (54) agencés pour générer un flux de gaz dans le canal d'écoulement depuis les première et seconde entrées (40a, 40b) d'air du conduit d'amenée jusqu'à une sortie du conduit d'évacuation (42),
le filtre se présentant sous la forme d'un ruban s'étendant depuis un compartiment de stockage (14) jusque dans un compartiment de réception (15), le dispositif (10, 11) étant caractérisé et en ce qu'il comprend un boîtier comprenant une première partie (12a) comportant le compartiment de stockage (14) et le compartiment de réception (15) et une seconde partie (12b) définissant avec la première partie (12a) le conduit d'amenée (40) d'air, et en ce que la première partie (12a) du boîtier comprend une porte (19) d'accès aux compartiments de réception et de stockage, une première fente (26) débouchant dans le compartiment de stockage (14) et une seconde fente (28) débouchant dans le compartiment de réception (15), la première fente (26) et la seconde fente (28) débouchant également sur un bord d'une paroi de la première partie du boîtier (12) sur laquelle est apte à venir s'appliquer la porte d'accès.

2. Dispositif selon la revendication 1, **caractérisé en ce que** la section de la première entrée d'air (40a) est sensiblement parallèle à la section de la seconde entrée d'air (40b).

3. Dispositif selon la revendication 1 ou 2, **caractérisé en ce que** le contour de la section de la première entrée d'air (40a) a une forme identique à celle du contour de la section de la seconde entrée d'air (40b).

4. Dispositif selon l'une des revendications 1 à 3, **caractérisé en ce que** la normale à la partie active (44) du filtre est sensiblement perpendiculaire à l'axe du conduit d'amenée (40) qui est sensiblement rectiligne.

5. Dispositif selon l'une des revendications 1 à 4, **caractérisé en ce que** l'extrémité amont du conduit d'évacuation (42) comprend une ouverture agencée en vis-à-vis de la partie active (44) du filtre.

6. Dispositif selon la revendication 5, **caractérisé en ce que** ladite partie active (44) du filtre affleure une paroi interne du conduit d'amenée (40).

7. Dispositif selon l'une des revendications 1 à 6, **caractérisé en ce que** la partie active (44) du filtre est montée en vis-à-vis d'au moins un détecteur (50).

8. Dispositif selon l'une des revendications 1 à 7, **caractérisé en ce que** le conduit d'évacuation (42) est sensiblement rectiligne et s'étend de préférence sensiblement perpendiculaire au conduit d'amenée (40).

9. Dispositif selon l'une quelconque des revendications précédentes, **caractérisé en ce qu'**il comprend des moyens d'entrainement du ruban depuis le compartiment de stockage (14) vers le compartiment de réception (15).

10. Dispositif selon l'une quelconque des revendications précédentes, dans lequel le conduit d'évacuation (42) sépare le compartiment de stockage (14) et le compartiment de réception (15).

11. Dispositif selon l'une quelconque des revendications précédentes, **caractérisé en ce que** la porte d'accès (19) comprend un élément de structure (49) délimitant en position de fermeture de la porte une portion du conduit.

12. Dispositif selon l'une des revendications 1 à 11, **caractérisé en ce que** les moyens d'aspiration (54) sont reliés au conduit d'évacuation (42) en aval dudit filtre de collecte.

13. Dispositif selon l'une des revendications 1 à 12, **caractérisé en ce que** le conduit d'amenée (40) a une section sensiblement constante.

14. Procédé de collecte de particules présentes dans l'air ambiant à l'aide du dispositif selon l'une des revendications 1 à 13, le procédé comprenant la génération d'un flux d'air dans le canal d'écoulement depuis les première et seconde entrées (40a, 40b) d'air du conduit d'amenée jusqu'à la sortie du conduit d'évacuation (42) pour collecter des particules sur la partie active du filtre de collecte de particules, **caractérisé en ce qu'**il comprend l'agencement du dispositif de manière à ce que la première entrée d'air (40a) et la seconde entrée d'air (40b) soient sensiblement alignées selon une direction verticale.

## Patentansprüche

1. Vorrichtung (10, 11) zum Sammeln von schwebenden Partikeln in der Luft, umfassend einen Strömungskanal für die mit Aerosolen beladene Luft, der eine Zufuhrleitung (40) und eine Abführleitung (42), die durch einen aktiven Teil (44) eines quer zum Strömungskanal angeordneten Partikelsammelfilters getrennt sind, aufweist, wobei die Zufuhrleitung (40) mindestens einen ersten Lufteinlass (40a) und einen zweiten Lufteinlass (40b) umfasst, wobei die Luftzufuhrleitung (40) derart ausgebildet ist, dass mindestens eine Gerade durch den ersten Lufteinlass und durch den zweiten Lufteinlass hindurchgehen kann, während sie sich integral innerhalb der Luftzufuhrleitung erstreckt, ein Saugmittel (54), das angeordnet ist, um einen Gasstrom in dem Strömungskanal von dem ersten und dem zweiten Lufteinlass (40a, 40b) der Zufuhrleitung zu einem Auslass der Abführleitung (42) zu erzeugen,
wobei der Filter die Form eines Bandes aufweist, das sich von einer Speicherkammer (14) in eine Aufnahmekammer (15) erstreckt, wobei die Vorrichtung (10, 11) **dadurch gekennzeichnet ist, dass** sie ein Gehäuse umfasst, das einen ersten Teil (12a), der die Speicherkammer (14) und die Aufnahmekammer (15) umfasst, und einen zweiten Teil (12b), der mit dem ersten Teil (12a) die Luftzufuhrleitung (40) definiert, umfasst, und dadurch, dass der erste Teil (12a) des Gehäuses eine Klappe (19) für den Zugang zu der Aufnahme- und der Speicherkammer, einen ersten Schlitz (26), der in die Speicherkammer (14) führt, und einen zweiten Schlitz (28), der in die Aufnahmekammer (15) führt, umfasst, wobei der erste Schlitz (26) und der zweite Schlitz (28) ebenfalls zu einem Rand einer Wand des ersten Teils des Gehäuses (12) führt, an der die Zugangsklappe angebracht werden kann.

2. Vorrichtung nach Anspruch 1, **dadurch gekennzeichnet, dass** der Abschnitt des ersten Lufteinlasses (40a) im Wesentlichen parallel zu dem Abschnitt des zweiten Lufteinlasses (40b) ist.

3. Vorrichtung nach Anspruch 1 oder 2, **dadurch gekennzeichnet, dass** die Kontur des Abschnitts des ersten Lufteinlasses (40a) eine mit der Kontur des Abschnitts des zweiten Lufteinlasses (40b) identische Form hat.

4. Vorrichtung nach einem der Ansprüche 1 bis 3, **dadurch gekennzeichnet, dass** die Normale des aktiven Teils (44) des Filters im Wesentlichen senkrecht zur Achse der im Wesentlichen geraden Zufuhrleitung (40) ist.

5. Vorrichtung nach einem der Ansprüche 1 bis 4, **dadurch gekennzeichnet, dass** das stromaufwärtige Ende der Abführleitung (42) eine Öffnung umfasst, die gegenüber dem aktiven Teil (44) des Filters angeordnet ist.

6. Vorrichtung nach Anspruch 5, **dadurch gekennzeichnet, dass** der aktive Teil (44) des Filters fluchtend mit einer Innenwand der Zufuhrleitung (40) ist.

7. Vorrichtung nach einem der Ansprüche 1 bis 6, **dadurch gekennzeichnet, dass** der aktive Teil (44) des Filters mindestens einem Sensor (50) gegenüber angebracht ist.

8. Vorrichtung nach einem der Ansprüche 1 bis 7, **dadurch gekennzeichnet, dass** die Abführleitung (42) im Wesentlichen linear ist und sich vorzugsweise im Wesentlichen senkrecht zur Zufuhrleitung (40) erstreckt.

9. Vorrichtung nach einem der vorhergehenden Ansprüche, **dadurch gekennzeichnet, dass** sie ein Mittel zum Antreiben des Bandes von der Speicherkammer (14) zu der Aufnahmekammer (15) umfasst.

10. Vorrichtung nach einem der vorhergehenden Ansprüche, wobei die Abführleitung (42) die Speicherkammer (14) und die Aufnahmekammer (15) trennt.

11. Vorrichtung nach einem der vorhergehenden Ansprüche, **dadurch gekennzeichnet, dass** die Zugangsklappe (19) ein Strukturelement (49) umfasst, das in der Schließstellung der Klappe einen Abschnitt der Leitung einschränkt.

12. Vorrichtung nach einem der Ansprüche 1 bis 11, **dadurch gekennzeichnet, dass** das Ansaugmittel (54) stromabwärts des Sammelfilters mit der Abführleitung (42) verbunden ist.

13. Vorrichtung nach einem der Ansprüche 1 bis 12, **dadurch gekennzeichnet, dass** die Zufuhrleitung (40) einen im Wesentlichen konstanten Querschnitt hat.

14. Verfahren zum Sammeln von in der Umgebungsluft vorhandenen Partikeln mit Hilfe der Vorrichtung nach einem der Ansprüche 1 bis 13, wobei das Verfahren das Erzeugen eines Luftstroms in dem Strömungskanal von dem ersten und dem zweiten Lufteinlass (40a, 40b) der Zufuhrleitung zum Auslass der Abführleitung (42) umfasst, um Partikel auf dem aktiven Teil des Partikelsammelfilters zu sammeln, **dadurch gekennzeichnet, dass** es die Anordnung der Vorrichtung auf eine Weise umfasst, dass der erste Lufteinlass (40a) und der zweite Lufteinlass (40b) im Wesentlichen in einer vertikalen Richtung ausgerichtet sind.

## Claims

1. A device (10, 11) for collecting particles in suspension in the air comprising a flow channel for the aerosol-containing air including a supply line (40) and a discharge line (42) separated by an active portion (44) of a particle collection filter disposed across the flow channel, the supply line (40) comprising at least a first air inlet (40a) and a second air inlet (40b), the air supply line (40) being shaped so that at least one straight line could pass through the first air inlet and through the second air inlet while extending entirely inside the air supply line, suction means (54) arranged to generate a gas flow in the flow channel from the first and second air inlets (40a, 40b) of the supply line up to an outlet of the discharge line (42), the filter being in the form of a strip extending from a storage compartment (14) up to a reception compartment (15),
the device (10, 11) being **characterised in that** it comprises a case comprising a first portion (12a) including the storage compartment (14) and the reception compartment (15) and a second portion (12b) defining with the first portion (12a) the air supply line (40), and **in that** the first portion (12a) of the case comprises a door (19) for access to the reception and storage compartments, a first slot (26) opening into the storage compartment (14) and a second slot (28) opening into the reception compartment (15), the first slot (26) and the second slot (28) also opening onto an edge of a wall of the first part of the case (12) on which the access door could be applied.

2. The device according to claim 1, **characterised in that** the section of the first air inlet (40a) is substantially parallel to the section of the second air inlet (40b).

3. The device according to claim 1 or 2, **characterised in that** the contour of the section of the first air inlet (40a) has a shape identical to that of the contour of the section of the second air inlet (40b).

4. The device according to one of claims 1 to 3, **characterised in that** the normal to the active portion (44) of the filter is substantially perpendicular to the axis of the supply line (40) which is substantially rectilinear.

5. The device according to one of claims 1 to 4, **characterised in that** the upstream end of the discharge line (42) comprises an opening arranged opposite the active portion (44) of the filter.

6. The device according to claim 5, **characterised in that** said active portion (44) of the filter is flush with an inner wall of the supply line (40).

7. The device according to one of claims 1 to 6, **characterised in that** the active portion (44) of the filter is mounted opposite at least one detector (50).

8. The device according to one of claims 1 to 7, **characterised in that** the discharge line (42) is substantially rectilinear and preferably extends substantially perpendicular to the supply line (40).

9. The device according to any one of the preceding claims, **characterised in that** it comprises means for driving the strip from the storage compartment (14) towards the reception compartment (15).

10. The device according to any one of the preceding claims, wherein the discharge line (42) separates the storage compartment (14) and the reception compartment (15).

11. The device according to any one of the preceding claims, **characterised in that** the access door (19) comprises a structural element (49) delimiting, in the closed position of the door, a portion of the line.

12. The device according to one of claims 1 to 11, **characterised in that** the suction means (54) are connected to the discharge line (42) downstream of said collection filter.

13. The device according to one of claims 1 to 12, **characterised in that** the supply line (40) has a substantially constant section.

14. A method for collecting particles present in ambient air using the device according to one of claims 1 to 13, the method comprising the generation of a gas flow in the flow channel from the first and second air inlets (40a, 40b) of the supply line up to the outlet of the discharge line (42) to collect particles on the active portion of the particle collection filter,
**characterised in that** it comprises the arrangement of the device so that the first air inlet (40a) and the second air inlet (40b) are substantially aligned according to a vertical direction.
